(19) Europäisches Patentamt

European Patent Office

Office européen des brevets

(11) Numéro de publication: **0 517 555 A1**

(12) # DEMANDE DE BREVET EUROPEEN

(21) Numéro de dépôt: **92401252.9**

(22) Date de dépôt: **04.05.92**

(51) Int. Cl.⁵: **B01J 37/20**

(30) Priorité: **06.05.91 FR 9105670**

(43) Date de publication de la demande:
**09.12.92 Bulletin 92/50**

(84) Etats contractants désignés:
**BE DE ES GB IT LU NL**

(71) Demandeur: **EUROPEENNE DE RETRAITEMENT DE CATALYSEURS (en abrégé EURECAT)**
**Ouai Jean Jaurès - Boite Postale 45**
**F-07800 LA VOULTE SUR RHONE(FR)**

(72) Inventeur: **Roumieu, Raymond**
**24, Faubourg Saint Jacques**
**F-26000 Valence(FR)**
Inventeur: **Boitiaux, Jean-Paul**
**4, avenue des Ursulines**
**F-78300 Poissy(FR)**

(74) Mandataire: **Andreeff, François**
**INSTITUT FRANCAIS DU PETROLE 4, avenue de Bois-Préau**
**F-92502 Rueil-Malmaison(FR)**

(54) **Procédé de prétraitement d'un catalyseur par un mélange d'un agent soufré et d'un agent réducteur organique.**

㉝ L'invention concerne un prétraitement d'un catalyseur de raffinage ou de pétrochimie contenant au moins un métal sous forme métallique ou sous forme d'oxyde métallique, dépose sur un support.

On imprègne le catalyseur par une solution organique renfermant, d'une part, un agent soufré et, d'autre part, un agent réducteur organique.

EP 0 517 555 A1

La présente invention est un perfectionnement de la demande de brevet français EN 90/09080 du 13/07/90.

Elle concerne le prétraitement d'un catalyseur de raffinage ou de pétrochimie contenant au moins un métal sous forme métallique ou sous forme d'oxyde métallique, déposé sur un support.

Selon l'invention, on imprègne le catalyseur par une solution organique renfermant, d'une part, un agent soufré (soufre et/ou composé soufré) et, d'autre part, un agent réducteur organique.

L'invention est réalisée plus particulièrement de la façon suivante.

On procède généralement "hors-site" (ex-situ) à l'imprégnation du catalyseur par un composé réducteur et par un composé soufré. On opère en solution organique entre 0 et 50 °C, de préférence entre 10 et 40 °C, plus particulièrement à température ambiante. Cette imprégnation est généralement réalisée par brassage de la masse catalytique avec le solvant, le composé réducteur et le composé soufré. Ce brassage est effectué par tout moyen adéquat.

Le composé sulfuré (ou soufré) est le diéthanol disulfure ou 2,2, dithiobis éthanol de formule $HO-C_2H_4-S-S-C_2H_4-OH$ (DEODS).

Le composé organique réducteur est choisi parmi le formiate de méthyle $HCOOCH_3$ et le formiate d'éthyle $HCOOC_2H_5$.

On utilisera à titre de solvant de préférence un white spirit tel que défini dans US-A-4530917 de la demanderesse, mais éventuellement également tout autre solvant adéquat tel qu'un alcool ou polyalcool, glycol ou polyglycol.

Lorsque l'imprégnation décrite ci-dessus est terminée, on procède alors, par exemple dans le four tournant, à un traitement thermique de la masse catalytique par exemple entre 100 et 200 °C, généralement entre 130 et 170 °C, et plus particulièrement autour de 150 °C, pendant 30 minutes à 3 heures, de préférence pendant environ 1 à 2 heures.

A ce stade, le catalyseur (dont l'activité initiale a été matée par empoisonnement des sites les plus actifs) est prêt à être livré au raffineur ou à l'utilisateur qui, "in situ", procédera éventuellement à une réduction à l'hydrogène du catalyseur, par exemple pour un catalyseur au nickel, entre 250 et 350 °C pendant 2 à 4 heures et de préférence entre 280 et 320 °C pendant 2,5 à 3,5 heures.

Dans la présente invention, on incorporera avantageusement dans le catalyseur d'une part 0,05 à 10 % et de préférence 0,2 à 1 % de soufre exprimé en poids de soufre par rapport à la masse de catalyseur et d'autre part 10 ppm à 100 %, de préférence 100 ppm à 50 % et plus particulièrement 1 000 ppm à 10 % en poids de composé réducteur par rapport à la masse de catalyseur.

Exemple 1 :

On a préparé deux lots de catalyseur à base d'alumine sur laquelle on a déposé en poids 6 % (exprimé en métal) d'oxyde de nickel.

Un premier lot de 100 grammes de catalyseur est imprégné par 0,48 g de DEODS (diéthanoldisulfure) renfermant 42,6 % de soufre en poids, en mélange dans 42 cm³ d'une solution de formiate de méthyle à 15 % dans un white spirit (volume poreux : 0,42 ml/g catalyseur).

Un deuxième lot de 100 grammes du même catalyseur est imprégné par 2,4 g de DEODS en mélange dans 42 cm³ d'une solution de formiate de méthyle à 15 % dans un white spirit.

A l'issue de cette première étape du procédé selon l'invention, chaque lot de catalyseur subit un traitement thermique à 150 °C pendant 1 heure.

Les analyses des catalyseurs ainsi traités sont indiquées dans le tableau I :

TABLEAU I

|            | S %  | C %  |
|------------|------|------|
| Lot n° 1   | 0,29 | 1,92 |
| Lot n° 2   | 0,80 | 2,03 |

Ce tableau permet de constater qu'une quantité correcte de soufre s'est fixée sur le catalyseur, qu'il reste du carbone sur le catalyseur, les quantités de soufre, de carbone étant de même ordre de grandeur que celles que l'on peut obtenir par les procédés antérieurs d'incorporation de soufre par le DMS par exemple.

Exemple 2 :

Le lot n° 1 est utilisé en comparaison avec un lot d'un catalyseur identique contenant également 0,29 % de soufre (en poids) mais introduit à l'aide de DMS et appelé ci-après catalyseur de référence.

Dans l'exemple 2, on teste les catalyseurs vis-à-vis de deux réactions :

1. L'hydrogénation des aromatiques (par exemple, conversion du toluène).

On a choisi une réaction modèle qui est l'hydrogénation du toluène dans les conditions suivantes :
- toluène : 10 % poids dans de l'heptane,
- température : 70 °C,
- pression : 30 bars,
- LHSV : 2 litres de charge par litre de catalyseur et par heure (vitesse spatiale liquide).

2. L'hydrogénation des dioléfines mesurée dans une réaction de craquage à la vapeur (steam cracking) par la variation de la MAV (indice d'anhydride maléïque caractéristique de la teneur en dioléfines) dans les conditions suivantes :
- pression : 30 bars,
- LHSV : 8,
- T : 100 °C,
- MAV de la charge : 87 (indice d'anhydride maléïque caractéristique de la teneur en dioléfines).

Les résultats sont données dans le tableau II, après réduction du catalyseur de référence par de l'hydrogène à 400 °C pendant 14 heures et apres réduction du catalyseur (initialement prétraité c'est-à-dire préréduit selon l'invention) à l'hydrogène pendant 2 h 50 minutes à diverses températures (200, 250 et 300 °C).

TABLEAU II

| | T° REDUCTION °C (A L'HYDROGENE) | CONVERSION DU TOLUENE % POIDS | MAV DU PRODUIT OBTENU |
|---|---|---|---|
| **Catalyseurs de référence :** | | | |
| | 400 °C pendant 14 h | 4 | 40 |
| **Catalyseurs prétraités selon l'invention :** | | | |
| | 200 °C pendant 3 h | 0 | 69 |
| | 250 °C pendant 3 h | 0 | 47 |
| | 300 °C pendant 3 h | 0 | 40 |

Dans cet exemple, on a déterminé les conditions opératoires optimales (ici 300 °C pendant 3 heures) pour qu'en fin de réduction à l'hydrogène on parvienne avec le catalyseur prétraité, c'est-à-dire préréduit selon l'invention, aux mêmes teneurs faibles en dioléfines qu'avec un catalyseur non prétraité et réduit de façon classique en présence d'hydrogène et pendant 14 heures à 400 °C.

L'invention permet donc de réduire ensuite à l'hydrogène le catalyseur pendant un temps plus court, et à moins haute température qu'un catalyseur non prétraité selon l'invention (et même pendant un temps légèrement plus court qu'un catalyseur prétraité en présence d'acide formique en solution aqueuse (cf FR 90/09080).

Exemple 3 :

Le lot n° 1 ainsi que le lot n° 2 sont utilisés en comparaison avec un lot d'un catalyseur identique contenant 0,80 % en poids de soufre mais le soufre ayant été introduit à l'aide de DMS et appelé ci-après catalyseur de référence.

Dans l'exemple 3, les catalyseurs qui présentent une bonne inhibition de l'activité hydrogénante des aromatiques ont été testés en hydrogénation d'essence de steam-cracking (craquage à la vapeur ou vapocraquage).

Ce test s'effectue dans les conditions suivantes :
- pression : 30 bars,
- LHSV : 8,
- température : 100 °C.

La charge est une essence industrielle de vapocraquage.

Les résultats sont donnés dans le tableau III. La MAV (indice d'anhydride maléïque indique la teneur en dioléfines et l'IBr (indice de brome) la teneur en oléfines.

Charge : MAV : 106
IBr : 46,5
S : 46 ppm.

TABLEAU III

|  | S | REDUCTION | MAV DU PRODUIT | IBr DU PRODUIT |
|---|---|---|---|---|
| Catalyseur de référence | 0,8 | 400 °C pendant 15 h (réduction à l'hydrogène) | 3 | 41,2 |
| Catalyseur prétraité selon l'invention | 0,29 | 300 °C pendant 4 h | 3 | 41,6 |
|  | 0,80 | 300 °C pendant 4 h | 3 | 47,7 |

On constate qu'en opérant avec un catalyseur prétraité selon l'invention (lot n° 1, à 0,29 % de soufre) et réduit ensuite à l'hydrogène pendant 4 h à 300 °C, on observe des résultats équivalents a ceux obtenus avec un catalyseur à 0,8 % S, non prétraité selon l'invention, et réduit à l'hydrogène à 400 °C pendant 15 heures.

On constate également qu'en opérant avec un catalyseur prétraité selon l'invention (lot n° 2 à 0,80 % de soufre) et réduit ensuite à l'hydrogène pendant 4 heures à 300 °C, on observe par comparaison avec le catalyseur de référence, non prétraité selon l'invention et traité ensuite à l'hydrogène pendant 15 heures à 400 °C, qu'en outre, non seulement on ne touche pas aux oléfines présentes dans la charge mais qu'on en gagne même un peu plus.

**Revendications**

**1.** Procédé de prétraitement d'un catalyseur de raffinage ou de pétrochimie contenant au moins un métal sous forme métallique ou sous forme d'oxyde métallique, déposé sur un support, caractérisé en ce qu'on imprègne ledit catalyseur par une solution organique renfermant, d'une part, au moins un agent soufré qui est le D.E.O.D.S. et d'autre part au moins un agent réducteur qui est le formiate de méthyle ou d'éthyle.

**2.** Procédé selon la revendication 1 dans lequel ladite solution organique est à base d'un white spirit.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 181 254 (EUROCAT) <br> * page 14, ligne 33 - page 16, ligne 7; revendications 1-18 * <br> --- | 1-2 | B01J37/20 |
| D,A | EP-A-0 303 525 (EUROCAT) <br> --- | | |
| D,A | US-A-4 530 917 (EUROCAT) <br> --- | | |
| D,A | WO-A-9 012 647 (IFP) <br> * revendications 1,4 * <br><br> ----- | 1 | |

| DOMAINES TECHNIQUES RECHERCHES (Int. Cl.5) |
|---|
| B01J |

Le présent rapport a été établi pour toutes les revendications

| Lieu de la recherche | Date d'achèvement de la recherche | Examinateur |
|---|---|---|
| LA HAYE | 17 JUIN 1992 | MICHIELS P. |